# EUROPÄISCHE PATENTSCHRIFT

(11) **EP 1 685 203 B1**
(45) Veröffentlichungstag und Bekanntmachung des Hinweises auf die Patenterteilung: **22.07.2009**
(21) Anmeldenummer: 05771865.2
(22) Anmeldetag: 14.07.2005
(51) Int. Cl.: C09G 3/00

(54) **SPRÜHWACHS**
SPRAY WAX
CIRE A PULVERISER

(30) Priorität: 16.07.2004 CH 120204
(43) Veröffentlichungstag der Anmeldung: 02.08.2006
(73) Patentinhaber: Mammut Sports Group AG, 5703 Seon (CH)
(72) Erfinder: KÜNZLER, Peter, CH-9450 Altstätten (CH)
(74) Vertreter: Bogensberger, Burkhard
(86) Internationale Anmeldenummer: PCT/EP2005/007665
(87) Internationale Veröffentlichungsnummer: WO 2006/008066

(56) Entgegenhaltungen:
- DE-A1- 2 456 629
- DE-A1- 19 901 973
- PATENT ABSTRACTS OF JAPAN Bd. 1998, Nr. 08, 30. Juni 1998 (1998-06-30) & JP 10 067969 A (COSMO SOGO KENKYUSHO:KK; COSMO OIL CO LTD), 10. März 1998 (1998-03-10)

## Beschreibung

### TECHNISCHES GEBIET

Die vorliegende Erfindung bezieht sich auf sprühbare Steigmittel zum Aufbringen auf die Laufflächen von Skiern, insbesondere von Langlaufskiern, sowie auf ein Verfahren zum Behandeln von Skiern mit dem Steigmittel.

### ALLGEMEINER STAND DER TECHNIK

Steighilfen sind im Skisport in verschiedenen Formen im Einsatz. Für Skitourengeher gibt es beispielsweise Steigfelle, die an der Unterseite von herkömmlichen Alpinskiern im Wesentlichen rutschfest befestigt und nach Gebrauch einfach wieder entfernt werden können.

Im Langlaufsport hingegen werden Steighilfen in Form von Wachsen und Klistern eingesetzt, die üblicherweise nur innerhalb einer bestimmten Zone im gewichtsbelasteten Mittelteil der Laufflächen, dem Abstossbereich, aufgetragen werden. Bekannt sind zu diesem Zweck viskose Pasten, die aus Tuben direkt auf die Lauffläche aufgebracht und dort mit Hilfe eines geeigneten Hilfsgerätes, beispielsweise eines Korkhobels, möglichst gleichmässig auf der Lauffläche verstrichen werden und dadurch der Lauffläche in diesem Bereich die gewünschte Haftung oder Griffigkeit ("grip") auf Schnee verleihen.

Als Nachteil in der Praxis hat sich bei diesen pastösen Systemen allerdings herausgestellt, dass bei Anwendungstemperaturen unterhalb von +10°C und insbesondere unterhalb des Nullpunktes das Behandeln der Skier nicht nur unangenehm erschwert sondern unter Umständen sogar unmöglich wird. Dies ist vor allem darauf zurück zu führen, dass einerseits die Viskosität der Pasten bei tiefen Temperaturen, wie sie im Winter nun einmal üblich sind, höher wird und zum anderen die Haftfähigkeit des Steigmittels an der Lauffläche vermindert ist, sodass sich die Behandlungsprozedur für das Auftragen des Steigmittels erheblich in die Länge ziehen kann und obendrein noch eine schlechtere Qualität liefert. Ausserdem ist es unter diesen Umständen wesentlich schwieriger, eine gleichmässige, dünne Steigmittelschicht zu erzielen.

Eine zu dicke Schicht an Steigmittel hat nämlich zur Folge, dass relativ leicht Verunreinigungen durch Wachs- und Klisterreste aus viel befahrenen Langlaufloipen in die Steigmittelschicht eingerieben werden und dadurch den ursprünglich beabsichtigten Effekt unter Umständen stören können.

Neben den pastösen Steigmitteln gibt es auch Steigmittel in Form von Folien oder Bändern, die beispielsweise wie gewöhnliche Klebebänder aufgerollt sind und mit einem Applikator direkt auf die Laufflächen der Langlaufskier aufgebracht werden können. Als Nachteil dieser Variante hat sich aber herausgestellt, dass eine gute Haftung der Steigmittel-Folien oder -Bänder an der Lauffläche eines Skis nur dann garantiert werden kann, wenn erstens die Lauffläche vor Aufbringen des Bandes oder der Folie mit einem Wachsreinigungsmittel gereinigt und anschliessend gut getrocknet wird, wenn zweitens das Band oder die Folie faltenfrei aufgebracht und angepresst wird und wenn drittens diese Schritte bei Raumtemperatur, d.h. bei ca. 20°C, vorgenommen werden.

Es werden im Stand der Technik allerdings auch flüssige, wenngleich sehr spezielle Steigmittelzusammensetzungen beschrieben, beispielsweise in DE 24 56 629 und DE 199 01 973 A1. Während DE 24 56 629 auf die Verwendung von Polystyrol in Kombination mit einem Motoröl oder einem Edelholzöl abzielt, offenbart DE 199 01 973 A1 die aufwändige Zubereitung einer ionischen Polyelektrolytkomponente mit entgegen gesetzt geladener anionischer Tensidkomponente als essentielle Beigaben zur Beschichtungsmixtur.

### KURZE BESCHREIBUNG DER ERFINDUNG

Dem gegenüber ist es die Aufgabe der vorliegenden Erfindung, ein Produkt bereit zu stellen, mit dem es möglich ist, die erwähnten Nachteile bekannter Anwendungsformen von Steigmitteln zu überwinden.

Dies wird erfindungsgemäss vor allem dadurch erreicht, dass das Steigmittel in flüssiger, sprühbarer Form bereit gestellt wird.

Unter "Steigmittel" soll hierin ein chemisches Präparat verstanden werden, welches nach dem Aufbringen auf die Lauffläche eines Skis daran haften bleibt, zumindest über einen bestimmten Zeitraum, und während dieses Zeitraums dem Ski Haftung und Griffigkeit auf Schnee verleiht. Ein solches Steigmittel ("grip agent"), erfindungsgemäss vorzugsweise auf Wachsbasis ("grip wax") oder Harzbasis ("grip resin"), ist vom Effekt her also das Gegenteil von einem Gleitmittel ("slip agent").

Es ist ein weiteres Ziel der vorliegenden Erfindung, eine Methode zum Aufbringen eines Steigmittels auf Skier bereit zu stellen, welche weitgehend unabhängig von der Umgebungstemperatur anwendbar ist.

Die erwähnten Aufgaben und Ziele werden durch die Massnahmen erreicht, welche in den unabhängigen Ansprüchen definiert sind. Weitere Ausführungsformen der Erfindung sind in den abhängigen Ansprüchen definiert.

In einer ersten Ausführungsform bezieht sich die Erfindung daher auf ein Steigmittel zum Auftragen auf Laufflächen von Skiern, welches in flüssiger, sprühbarer Form vorliegt und besteht aus:
mindestens einer der Komponenten aromatische Kohlenwasserstoffharze, aliphatische Kohlenwasserstoffharze, Paraffinwachse; mindestens einer der Komponenten Polyisobutene, thermoplastische Kautschuke, wachsartige Substanzen, ölige Substanzen, Vaseline, Polyisobutene, Copolymere von Alphaolefinen; und einem fettlösenden, organischen, gegebenenfalls leicht flüchtigen, Lösungsmittel, vorzugsweise aus der Gruppe Methylether, Dimethylether, Chloroform, Tetrachlorkohlenstoff, Methylal, Propan, Butan, Pentan, Hexan, Cyclohexan, Heptan, Oktan, Nonan, Dekan, Benzin, benzinartige Lösungsmittel, oder einer Mischung davon; sowie gegebenenfalls zusätzlich einem Treibmittel.

In einer weiteren Ausführungsform bezieht sich die Erfindung auf ein derartiges Steigmittel, welches wenigstens ein höher siedendes Lösungsmittel, insbesondere aus der Gruppe Pentan, Hexan, Cyclohexan, Heptan, Oktan, Nonan, Dekan zusammen mit wenigstens einem tiefer siedenden Lösungsmittel, insbesondere aus der Gruppe Propan, Butan, Isobutan oder einem Gemisch davon, enthält.

In diesem Zusammenhang sind unter "höher siedenden" Lösungsmitteln solche zu verstehen, deren Siedepunkt im Bereich der Raumtemperatur (ca. 20°C) oder darüber liegt, und unter "tiefer siedenden" Lösungsmitteln solche, deren Siedepunkt unterhalb von 20°C, vorzugsweise unterhalb von 0°C liegt.

Weiters bezieht sich die Erfindung auf ein Verfahren zum Aufbringen eines Steigmittels auf die Lauffläche eines Skis, dadurch gekennzeichnet, dass eine flüssige, sprühbare, Zusammensetzung auf der Basis von Harzen oder Wachsen, die als Steigmittel geeignet sind, durch Aufsprühen auf die Lauffläche eines Skis aufgetragen wird.

In einer weiteren Ausführungsform bezieht sich die Erfindung auf ein derartiges Verfahren, wobei die Zusammensetzung ein fettlösendes, organisches, gegebenenfalls leicht flüchtiges, Lösungsmittel oder Lösungsmittelgemisch, sowie gegebenenfalls zusätzlich ein Treibmittel enthält und die Zusammensetzung nach Abdampfen des Lösungs- und gegebenenfalls Treibmittels einen Steigmittel-Film ausbildet.

In einer weiteren Ausführungsform bezieht sich die Erfindung auf ein derartiges Verfahren, wobei die Zusammensetzung nach dem Aufsprühen manuell oder maschinell gleichmässig verteilt wird.

In einer weiteren Ausführungsform bezieht sich die Erfindung auf ein derartiges Verfahren, welches maschinell, vorzugsweise vollautomatisch, durchgeführt wird.

In einer weiteren Ausführungsform bezieht sich die Erfindung auf ein derartiges Verfahren, wobei das Aufsprühen manuell unter Verwendung einer Spraydose durchgeführt wird.

In einer weiteren Ausführungsform bezieht sich die Erfindung auf ein derartiges Verfahren, welches bei einer Temperatur von -30°C bis +25°C durchgeführt wird.

Darüber hinaus bezieht sich die Erfindung auch auf die Verwendung der erfindungsgemässen, flüssigen Steigmittelzusammensetzung zum Präparieren von Skieren, insbesondere von Langlaufskiern.

### DETAILLIERTE BESCHREIBUNG DER ERFINDUNG

Im Einzelnen handelt es sich bei der vorliegenden Erfindung um ein Steigmittel auf der Basis einer Mischung von Harzen und/oder einer Mischung von wachsartigen Komponenten und/oder Anteilen von Paraffinölen, welche in einem Lösungsmittel gelöst vorliegen und mittels Sprühdosen auf Treibmittelbasis oder mittels manuell pumpbarer Sprühdosen auf die Laufflächen von Skiern aufgebracht werden können.

In einer Ausführungsform enthält die erfindungsgemässe Steigmittelzusammensetzung neben einer Mischung handelsüblicher Steigharze ein organisches Lösungsmittel aus der Gruppe der fettlösenden Lösungsmittel, insbesondere Methylether, Dimethylether, Chloroform, Tetrachlorkohlenstoff, Methylal, Propan, Butan, Pentan, Hexan, Cyclohexan, Benzin und benzinartige Lösungsmittel, und dergleichen, oder ein Gemisch aus zwei oder mehreren dieser Lösungsmittel. Bei Verwendung von tief siedenden, leicht flüchtigen Kohlenwasserstoffen wie Propan, Butan oder deren Mischungen als Lösungsmittel ist ein zusätzliches Treibmittel nicht erforderlich. Hingegen ist bei Verwendung höher siedender Lösungsmittel, wie beispielsweise Hexan, Cyclohexan, Heptan, Oktan, Nonan oder Dekan, der Zusatz eines Treibmittels in Form eines tiefer siedenden Lösungsmittels wie z.B. Propan, Butan, Isobutan oder eines Gemisches davon bevorzugt.

Typischerweise enthält die Steigmittelzusammensetzung Harze aus der Gruppe der aromatischen oder aliphatischen Kohlenwasserstoffharze, vorzugsweise zusammen mit wenigstens einer weiteren Komponente aus der Gruppe Polyisobutene, thermoplastische Kautschuke, wachsartige und ölige Substanzen.

Mit der erfindungsgemässen Steigmittelzusammensetzung ist es möglich, selbst bei Aussentemperaturen unter dem Gefrierpunkt die Laufflächen von Skiern auf einfachste Weise zu behandeln und gleichmässige, dünne Steigmittelfilme zu erzielen. Bei geübter Handhabung kann sogar auf ein Hilfsmittel zum Verstreichen des Steigmittels verzichtet werden.

Typischerweise wird das in einem Lösungsmittel gelöste Steigmittel aus einer Entfernung von ca. 20 bis 30 cm mittels einer Spraydose auf die Lauffläche aufgesprüht und gegebenenfalls noch vor dem vollständigen Verdampfen des Lösungsmittels mit dem Finger oder einem geeigneten Hilfsmittel gleichmässig verteilt. Es ist aber auch nach dem Verdampfen des Lösungsmittels noch möglich, das Steigmittel auf der Lauffläche zu verstreichen. Nach einiger Übung wird aber selbst ein nicht-professioneller Skisportler in der Lage sein, allein durch gleichmässiges Aufsprühen die gewünschte Filmstärke und Gleichverteilung des Steigmittels zu erzielen, ohne dass es einer Nachbehandlung durch Verstreichen bedürfte.

Dies ist natürlich insbesondere für die Anwendung im Freien von erheblichem Vorteil.

Die erfindungsgemässe Steigmittelzusammensetzung kann innerhalb breiter Grenzen variiert und an verschiedene Schneeverhältnisse und Aussentemperaturen angepasst werden. Insbesondere ist auch bei der Auswahl der Lösungs- und/oder Treibmittel auf die voraussichtlichen Anwendungstemperaturen Rücksicht zu nehmen, um eine gute Sprühbarkeit bei gleichzeitig möglichst raschem Verdampfen des Lösungs- und/oder Treibmittels nach dem Aufsprühen zu gewährleisten. So sind beispielsweise bei niedrigeren Temperaturen kürzerkettige Alkane (C1-C3) als Lösungsmittel zu bevorzugen, während bei Temperaturen im Bereich der Raumtemperatur, d.h. bei ca. 20 - 25 °C, auch derivatisierte Alkane und längerkettige Alkane mit einer Kettenlänge von beispielsweise 4 bis 10 Kohlenstoffatomen als Lösungsmittel, gegebenenfalls in Kombination mit einem zusätzlichen Treibmittel, eingesetzt werden können.

Die erfindungsgemässe Methode zum Präparieren von Skiern mit sprühbarem Steigmittel eignet sich sowohl für das manuelle Präparieren von Skiern, insbesondere von Langlaufskiern, durch Amateur- und Profisportler, als auch für ein maschinelles, insbesondere vollautomatisch durchführbares, Präparieren von Skiern, beispielsweise für den Rennsport.

Als Alternative zum Aufsprühen ist auch das Aufbringen der erfindungsgemässen flüssigen Steigmittelzusammensetzung mittels eines geeigneten Pinsels oder Schwammes grundsätzlich möglich, aufgrund der etwas umständlicheren Handhabung und längeren Bearbeitungsdauer jedoch hauptsächlich für die Anwendung in einem Präparationsraum geeignet.

Die Erfindung soll anhand der nachfolgenden Beispiele näher erläutert werden.

### Beispiel 1: Sprühbares Steigmittel auf der Basis von Harzen

### Zusammensetzung:

60-90 Gew.% Kohlenwasserstoffharze,
20-40 Gew.% Polyisobutene,
10-30 Gew.% Paraffinöle,
5-10 Gew.% thermoplastische Kautschuke. Lösungsmittel/Treibmittel: Propan oder Butan oder Gemische davon. In diesem Fall fungiert das tief siedende, leicht flüchtige Treibmittel oder Treibmittelgemisch gleichzeitig auch als Lösungsmittel.

Diese Mischung ist vor allem für Altschneeverhältnisse ideal, wo der Schnee schon umgewandelt ist, d.h. wo der Schnee bereits einmal oder mehrmals durch einen kalt/warm-Zyklus vom kristallinen in den amorphen Zustand übergegangen ist.

Nach dem manuellen Aufsprühen mittels Sprühdose (Füllvolumen vorzugsweise 100 bis 200 ml) kann die noch lösungsmittelfeuchte Masse mit einem glatten Gegenstand verstrichen werden, wobei gleichzeitig eventuell vorhandene Lösungsmittelbläschen oder eventuell vorhandener Lösungsmittelschaum entfernt werden. Der günstigste Zeitpunkt für ein solches Verstreichen ist abhängig von der Temperatur, bei welcher der Aufsprühvorgang durchgeführt wird, und bewegt sich üblicherweise im Bereich von wenigen Sekunden bis zu einer halben Minute nach dem Aufsprühen.

Bei gleichmässigem Aufsprühen kann auf das Verstreichen unter Umständen sogar gänzlich verzichtet werden.

Dieser Vorgang kann natürlich auch mittels einer einfachen, maschinellen Sprühvorrichtung, wie sie in ähnlicher Form aus Lackierereien bekannt ist, in einem Skipräparationsraum vorgenommen werden. Auf ein Nachpolieren kann aufgrund der exakten Dosierung bei maschinellem Sprühen im Regelfall verzichtet werden.

Nach einer Trocknungszeit von ca. 1,5 - 3 Minuten ist der präparierte Ski einsatzfähig.

### Beispiel 2: Sprühbares Steigmittel auf Wachsbasis

### Zusammensetzung:

40-70 Gew.% Paraffinwachse,
5-30 Gew.% Vaseline,
5-20 Gew.% Polyisobuten,
5-30 Gew.% Alpha-Olefin-Copolymere.

Lösungsmittel/Treibmittel: Hexan, Cylcohexan, Heptan oder ein Gemisch davon, sowie zusätzlich ein tief siedendes, leicht flüchtiges Treibmittel wie Propan oder Butan oder ein Gemisch davon.

Diese Mischung ist vor allem für Neuschneeverhältnisse ideal, wo der Schnee noch kristalline Struktur aufweist und noch nicht umgewandelt ist.

Nach dem Aufsprühen des Steigwachses auf die Startzone der Lauffläche eines Langlaufskis kann die noch lösungsmittelfeuchte Masse mit einem glatten Gegenstand verstrichen werden. Eventuell vorhandene Lösungsmittel- oder Treibmittelbläschen oder eventuell vorhandener Lösungsmittel- bzw. Treibmittelschaum wird dabei gleichzeitig entfernt. Der günstigste Zeitpunkt für ein solches Verstreichen ist abhängig von der Temperatur, bei welcher der Aufsprühvorgang durchgeführt wird, und bewegt sich üblicherweise im Bereich von wenigen Sekunden bis zu einer Minute nach dem Aufsprühen.

Bei gleichmässigem Aufsprühen, wie beispielsweise bei maschineller Präparation des Skis, kann auf das Verstreichen im Regelfall gänzlich verzichtet werden.

Nach einer Trocknungszeit von ca. 2 - 5 Minuten ist der präparierte Ski einsatzfähig.

## Patentansprüche

1. Steigmittel zum Auftragen auf Laufflächen von Skiern, **dadurch gekennzeichnet, dass** es in flüssiger, sprühbarer Form vorliegt und aus folgenden Komponenten besteht:
a) mindestens einer Komponente aus der Gruppe aromatische Kohlenwasserstoffharze, aliphatische Kohlenwasserstoffharze, Paraffinwachse;
b) mindestens einer Komponente aus der Gruppe Polyisobutene, thermoplastische Kautschuke, wachsartige Substanzen, ölige Substanzen, Vaseline, Copolymere von Alphaolefinen;
c) einem organischen, fettlösenden Lösungsmittel oder Lösungsmittelgemisch; sowie
d) gegebenenfalls zusätzlich einem Treibmittel.

2. Steigmittel nach Anspruch 1, **dadurch gekennzeichnet, dass** es als sprühbares Steigharz vorliegt und mindestens ein aliphatisches oder aromatisches Kohlenwasserstoffharz zusammen mit mindestens einer Komponente aus der Gruppe Polyisobutene, thermoplastische Kautschuke, wachsartige Substanzen, ölige Substanzen, enthält.

3. Steigmittel nach Anspruch 1, **dadurch gekennzeichnet, dass** es als sprühbares Steigwachs vorliegt und mindestens ein Paraffinwachs zusammen mit mindestens einer Komponente aus der Gruppe Vaseline, Polyisobutene, Copolymere von Alphaolefinen, enthält.

4. Steigmittel nach einem der Ansprüche 1 bis 3, **dadurch gekennzeichnet, dass** es ein fettlösendes, organisches Lösungsmittel aus der Gruppe Methylether, Dimethylether, Chloroform, Tetrachlorkohlenstoff, Methylal, Propan, Butan, Pentan, Hexan, Cyclohexan, Heptan, Oktan, Nonan, Dekan, Benzin, benzinartige Lösungsmittel, oder eine Mischung davon, enthält.

5. Steigmittel nach einem der Ansprüche 1 bis 4, **dadurch gekennzeichnet, dass** es mindestens ein organisches Lösungsmittel mit einem Siedepunkt unterhalb von 20°C enthält.

6. Steigmittel nach Anspruch, **dadurch gekennzeichnet, dass** es mindestens ein organisches Lösungsmittel mit einem Siedepunkt unterhalb von 0°C enthält.

7. Steigmittel nach Anspruch 5 oder 6, **dadurch gekennzeichnet, dass** das Lösungsmittel aus der Gruppe Propan, Butan, Isobutan, Dimethylether, oder einem Gemisch davon ausgewählt ist.

8. Steigmittel nach einem der Ansprüche 1 bis 7, **dadurch gekennzeichnet, dass** es wenigstens ein organisches Lösungsmittel mit einem Siedpunkt von 20°C oder darüber zusammen mit wenigstens einem organischen Lösungsmittel mit einem Siedepunkt unterhalb von 20°C enthält.

9. Steigmittel nach Anspruch 8, **dadurch gekennzeichnet, dass dass** organische Lösungsmittel mit einem Siedpunkt von 20°C oder darüber aus der Gruppe Pentan, Hexan, Cyclohexan, Heptan, Oktan, Nonan, Dekan, Methylal, und das organische Lösungsmittel mit einem Siedepunkt unterhalb von 20°C aus der Gruppe Propan, Butan, Isobutan, Dimethylether, oder einem Gemisch davon, ausgewählt ist.

10. Steigmittel nach Anspruch 2, **dadurch gekennzeichnet, dass** es folgende Bestandteile enthält:
60-90 Gew.% Kohlenwasserstoffharze,
20-40 Gew.% Polyisobutene,
10-30 Gew.% Paraffinöle,
5-10 Gew.% thermoplastische Kautschuke;
sowie Propan und/oder Butan als Lösungsmittel.

11. Steigmittel nach Anspruch 3, **dadurch gekennzeichnet, dass** es folgende Bestandteile enthält:
40-70 Gew.% Paraffinwachse,
5-30 Gew.% Vaseline,
5-20 Gew.% Polyisobutene,
5-30 Gew.% Alpha-Olefin-Copolymere, sowie
als Lösungsmittel Hexan, Cylcohexan, Heptan oder ein Gemisch davon, sowie gegebenenfalls zusätzlich als Treibmittel Propan oder Butan oder ein Gemisch davon.

12. Verfahren zum Aufbringen eines Steigmittels auf die Lauffläche eines Skis, **dadurch gekennzeichnet, dass** ein in einem der Ansprüche 1 bis 11 definiertes, flüssiges, sprühbares Steigmittel eingesetzt und durch Aufsprühen auf die Lauffläche eines Skis aufgetragen wird.

13. Verfahren nach Anspruch 12, **dadurch gekennzeichnet, dass** das Aufsprühen im gewichtsbelasteten Mittelteil des Skis erfolgt.

14. Verfahren nach einem der Ansprüche 12 oder 13, **dadurch gekennzeichnet, dass** das Aufsprühen manuell unter Verwendung einer Spraydose oder maschinell durchgeführt wird.

15. Verfahren nach einem der Ansprüche 12 bis 14, **dadurch gekennzeichnet, dass** es bei einer Temperatur von -30°C bis +25°C durchgeführt wird.

16. Verwendung einer flüssigen, sprühbaren Steigmittelzusammensetzung nach einem der Ansprüche 1 bis 11, zum Präparieren von Skiern.

## Claims

1. Grip agent for application to running surfaces of skis, **characterized in that** it is present in liquid, sprayable form and consists of the following components:
a) at least one component from the group consisting of aromatic hydrocarbon resins, aliphatic hydrocarbon resins, paraffin waxes;
b) at least one component from the group consisting of polyisobutenes, thermoplastic rubbers, waxy substances, oily substances, Vaseline, copolymers of alpha-olefins;
c) an organic, fat-dissolving solvent or solvent mixture; and
d) optionally additionally a blowing agent.

2. Grip agent according to Claim 1, **characterized in that** it is present as a sprayable grip resin and contains at least one aliphatic or aromatic hydrocarbon resin together with at least one component from the group consisting of polyisobutenes, thermoplastic rubbers, waxy substances and oily substances.

3. Grip agent according to Claim 1, **characterized in that** it is present as sprayable grip wax and contains at least one paraffin wax together with at least one component from the group consisting of Vaseline, polyisobutenes and copolymers of alpha-olefins.

4. Grip agent according to any of Claims 1 to 3, **characterized in that** it contains a fat-dissolving, organic solvent from the group consisting of methyl ether, dimethyl ether, chloroform, carbon tetrachloride, methylal, propane, butane, pentane, hexane, cyclohexane, heptane, octane, nonane, decane, benzine, benzine-like solvents or a mixture thereof.

5. Grip agent according to any of Claims 1 to 4, **characterized in that** it contains at least one organic solvent having a boiling point below 20°C.

6. Grip agent according to Claim 5, **characterized in that** it contains at least one organic solvent having a boiling point below 0°C.

7. Grip agent according to Claim 5 or 6, **characterized in that** the solvent is selected from the group consisting of propane, butane, isobutane, dimethyl ether or a mixture thereof.

8. Grip agent according to any of Claims 1 to 7, **characterized in that** it contains at least one organic solvent having a boiling point of 20°C or higher, together with at least one organic solvent having a boiling point below 20°C.

9. Grip agent according to Claim 8, **characterized in that** the organic solvent having a boiling point of 20°C or higher is selected from the group consisting of pentane, hexane, cyclohexane, heptane, octane, nonane, decane and methylal, and the organic solvent having a boiling point below 20°C is selected from the group consisting of propane, butane, isobutane, dimethyl ether or a mixture thereof.

10. Grip agent according to Claim 2, **characterized in that** it contains the following constituents:
60-90% by weight of hydrocarbon resins,
20-40% by weight of polyisobutenes,
10-30% by weight of liquid paraffins,
5-10% by weight of thermoplastic rubbers
and propane and/or butane as solvents.

11. Grip agent according to Claim 3, **characterized in that** it contains the following constituents:
40-70% by weight of paraffin waxes,
5-30% by weight of Vaseline,
5-20% by weight of polyisobutenes,
5-30% by weight of alpha-olefin copolymers, and hexane, cyclohexane, heptane or a mixture thereof as a solvent, and optionally additionally propane or butane or a mixture thereof as a blowing agent.

12. Method for applying a grip agent to the running surface of a ski, **characterized in that** a liquid, sprayable grip agent defined in any of Claims 1 to 11 is used and is applied to the running surface of a ski by spraying on.

13. Method according to Claim 12, **characterized in that** the spraying is effected in the weight-loaded middle part of the ski.

14. Method according to either of Claims 12 and 13, **characterized in that** the spraying is carried out manually with the use of a spray can or mechanically.

15. Method according to any of Claims 12 to 14, **characterized in that** it is carried out at a temperature of -30°C to +25°C.

16. Use of a liquid, sprayable grip agent composition according to any of Claims 1 to 11 for the preparation of skis.

## Revendications

1. Agent d'aide à l'ascension, pour application sur des surfaces de glisse de skis, **caractérisé en ce qu'**ils se présente sous forme liquide, pulvérisable, et est formé des composants suivants :
a) au moins un composant, issu du groupe des résines d'hydrocarbures aromatiques, des résines d'hydrocarbures aliphatiques, des cires de paraffine ;
b) au moins un composant, issu du groupe des polyisobutènes, caoutchoucs thermoplastiques, substances du type cire, substances huileuses, vaseline, copolymères d'alpha-oléfines ;
c) un solvant ou un mélange de solvants, diluant les graisses, organique, et
d) le cas échéant, en plus, un agent expansif.

2. Agent d'aide à l'ascension selon la revendication 1, **caractérisé en ce qu'**il se présente sous forme de résine d'aide à l'ascension pulvérisable, et contient au moins une résine d'hydrocarbure aliphatique ou aromatique, conjointement avec au moins un composant issu du groupe des polyisobutènes, caoutchoucs thermoplastiques, substances du type cire, substances huileuses.

3. Agent d'aide à l'ascension selon la revendication 1, **caractérisé en ce que qu**'il se présente sous forme de cire d'aide à l'ascension pulvérisable, et contient au moins une cire de paraffine, conjointement avec au moins un composant issu du groupe de la vaselines, des polyisobutènes, des copolymères d'alpha-oléfines.

4. Agent d'aide à l'ascension selon l'une des revendications 1 à 3, **caractérisé en ce qu'**il contient un solvant organique, diluant les graisses, issu du groupe des méthyléther, diméthyléther, chloroforme, tétrachlorure de carbone, méthylal, propane, butane, pentane, hexane, cyclohexane, heptane, octane, nonane, décane, benzine, solvant de type benzine, ou un mélange de ceux-ci.

5. Agent d'aide à l'ascension selon l'une des revendications 1 à 4, **caractérisé en ce qu'**il contient au moins un solvant organique, ayant un point d'ébullition inférieur à 20° C.

6. Agent d'aide à l'ascension selon la revendication 5, **caractérisé en ce qu'**il contient au moins un solvant organique, ayant un point d'ébullition inférieur à 0° C.

7. Agent d'aide à l'ascension selon la revendication 5 ou 6, **caractérisé en ce que** le solvant organique est sélectionné dans le groupe formé du propane, butane, isobutane, diméthyléther, ou un mélange de ceux-ci.

8. Agent d'aide à l'ascension selon l'une des revendications 1 à 7, **caractérisé en ce qu'**il contient un au moins un solvant organique, ayant un point d'ébullition de 20° C ou plus, conjointement avec au moins un solvant organique, ayant un point d'ébullition inférieur à 20° C.

9. Agent d'aide à l'ascension selon la revendication 8, **caractérisé en ce que** le solvant organique, ayant un point d'ébullition de 20° C ou plus, est sélectionné dans le groupe formé des pentane, hexane, cyclohexane, heptane, octane, nonane, décane, méthylal, et le solvant organique, ayant un point d'ébullition inférieur à 20° C est sélectionné dans le groupe formé des propane, butane, isobutane, diméthyléther, ou un mélange de ceux-ci.

10. Agent d'aide à l'ascension selon la revendication 2, **caractérisé en ce qu'**il contient les composants suivants :
60 - 90 % en poids de résines d'hydrocarbures,
20 à 40 % en poids de polyisobutènes,
10 à 30 % en poids d'huiles de paraffine,
5 à 10 % en poids de caoutchoucs thermoplastique ;
ainsi que du propane et/ou du butane en tant que solvant.

11. Agent d'aide à l'ascension selon la revendication 3, **caractérisé en ce qu'**il contient les composants suivants :
40 - 70 % en poids de cires de paraffine,
5 à 30 % en poids de vaseline,
5 à 20 % en poids d'isobutènes,
5 à 30 % en poids de copolymères d'alpha-oléfine, ainsi que,
en tant que solvant, de l'hexane, cyclohexane, heptane, ou un mélange de ceux-ci, ainsi que, le cas échéant, en plus, en tant qu'agent expansif, du propane ou du butane, ou un mélange de ceux-ci.

12. Procédé d'application d'un agent d'aide à l'ascension sur la surface de glisse d'un ski, **caractérisé en ce qu'**un agent d'aide à l'ascension, pulvérisable, liquide, défini dans l'une des revendications 1 à 11, est utilisé, et appliqué, par pulvérisation, sur la surface de glisse d'un ski.

13. Procédé selon la revendication 12, **caractérisé en ce que** la pulvérisation s'effectue dans la partie centrale, chargée par le poids, du ski.

14. Procédé selon l'une des revendications 12 ou 13, **caractérisé en ce que** la pulvérisation est effectuée manuellement, en utilisant une boite de pulvérisation (spraydose), ou de façon mécanisée.

15. Procédé selon l'une des revendications 12 à 14, **caractérisé en ce que** la mise en oeuvre est effectuée à une température dans la fourchette de -30° à +25°C.

16. Utilisation d'une composition d'agent d'aide à l'ascension liquide, pulvérisable, selon l'une des revendications 1 à 11, pour la préparation de skis.
